# DEMANDE DE BREVET EUROPEEN

(11) **EP 4 707 017 A1**
(43) Date de publication de la demande: **11.03.2026**
(21) Numéro de dépôt: 25200741.4
(22) Date de dépôt: 08.09.2025
(51) Int. Cl.: B60K 11/08, B60R 19/52

(54) **DISPOSITIF D' AÉRATION POUR UN VÉHICULE**

(30) Priorité: 09.09.2024 FR 2409538
(71) Demandeur: Flex-N-Gate France, 25405 Audincourt (FR)
(72) Inventeur: DUQUESNOY, David, 70400 CHALONVILLARS (FR); FREY, Stéphane, 70400 FRAHIER (FR)
(74) Mandataire: Lavoix

(57) **Abrégé**

La présente invention concerne un dispositif d'aération pour un véhicule, comprenant :
- un élément de carrosserie comprenant une face externe, tournée vers l'extérieur du véhicule, et une face interne, opposée à la face externe, ledit élément de carrosserie comprenant au moins une zone d'aération (6) comprenant une pluralité d'ouvertures traversant le corps de la face externe à la face interne, l'élément de carrosserie s'étendant selon une direction générale transversale T,
- un volet d'obturation mobile entre une position fermée, dans laquelle le volet obture les ouvertures de la zone d'aération (6), et une position ouverte, dans laquelle le volet d'obturation est écarté desdites ouvertures (8),
caractérisé en ce que le volet d'obturation présente une surface supérieure à la surface de la zone d'aération.

## Description

La présente invention concerne un dispositif d'aération pour un véhicule du type comprenant un élément de carrosserie, comprenant une face externe, tournée vers l'extérieur du véhicule, et une face interne, opposée à la face externe, ledit élément de carrosserie comprenant au moins une zone d'aération comprenant une pluralité d'ouvertures traversant le corps de la face externe à la face interne, l'élément de carrosserie s'étendant selon une direction générale transversale T, un volet d'obturation mobile entre une position fermée, dans laquelle le volet obture les ouvertures de la zone d'aération, et une position ouverte, dans laquelle le volet d'obturation est écarté desdites ouvertures.

L'invention concerne en particulier un dispositif d'aération destiné à gérer les flux d'air à l'intérieur d'un véhicule, notamment du bloc moteur, permettant à la fois de refroidir celui-ci, mais aussi de modifier l'aérodynamisme du véhicule. Un tel dispositif d'aération comprend généralement plusieurs volets agencés dans une ouverture d'entrée d'air d'un élément de carrosserie, tel qu'une peau de pare-chocs, les volets d'obturation permettant de gérer le débit d'air entrant dans le véhicule en pivotant autour de leurs axes par rapport à l'ouverture pour laisser passer plus ou moins d'air par l'ouverture. Ces volets possèdent une forme adaptée à l'ouverture dans laquelle ils sont montés.

Ainsi, de tels dispositifs requièrent des volets d'obturation aux dimensions ajustées sur les dimensions de l'élément de carrosserie sur lequel les volets d'obturation sont montés, notamment pour être adaptés à la forme et aux dimensions de l'ouverture d'entrée d'air. Cela implique de devoir fabriquer un modèle de volet pour chaque modèle de véhicule comprenant un élément de carrosserie différent, ce qui entraine des surcoûts liés à la production et à la logistique engendrés par la multitude de modèles de volets.

L'un des buts de l'invention est de pallier ces inconvénients en proposant un dispositif d'aération adapté à plusieurs modèles de véhicule.

A cet effet, l'invention a pour objet un dispositif d'aération pour un véhicule du type précité, caractérisé en ce que le volet d'obturation présente une surface supérieure à la surface de la zone d'aération.

L'invention propose d'utiliser un volet d'obturation unique pour ouvrir ou fermer les ouvertures de la zone d'aération, le volet d'obturation ayant une surface supérieure à celle de la zone d'aération. Ainsi, un même volet d'obturation peut être adapté à plusieurs zones d'aération de formes et/ou de dimensions différentes, ce qui permet d'utiliser un même modèle de volet d'obturation pour différents éléments de carrosserie. En effet il suffit que la surface du volet d'obturation puisse couvrir en position fermée la totalité des ouvertures de la zone d'aération pour assurer le fonctionnement normal du dispositif d'aération. Un tel volet peut donc être utilisé sur plusieurs modèles de véhicules.

Suivant d'autres aspects avantageux de l'invention, le dispositif d'aération peut comprendre une ou plusieurs des caractéristiques des revendications 2 à 10, prises isolément ou suivant toutes les combinaisons techniquement possibles.

L'invention apparaîtra plus clairement à la lecture de la description qui va suivre, donnée uniquement à titre d'exemple non limitatif, et faite en référence aux dessins dans lesquels :
[Fig. 1] la figure 1 est une représentation schématique de derrière d'un dispositif d'aération selon l'invention, un volet étant en position ouverte,
[Fig. 2] la figure 2 est une représentation schématique du dispostif d'aération de la figure 1, le volet étant en position fermée,
[Fig. 3] la figure 3 est une représentation schématique en perspective d'une partie d'une zone d'aération d'un dispositif d'aération selon un autre mode de réalisation de l'invention, et
[Fig. 4] la figure 4 est une représentation schématique en perspective du dispositif d'aération de la figure 1, le volet étant en position fermée.

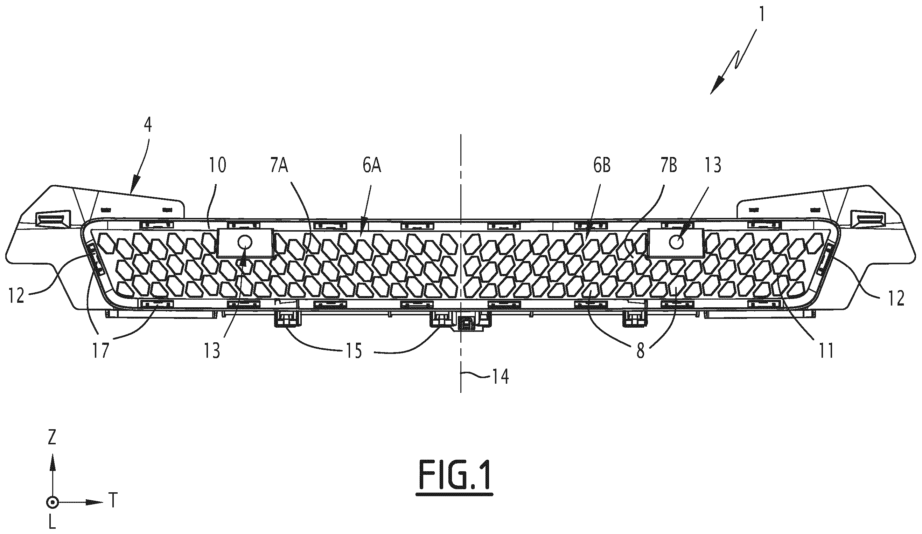

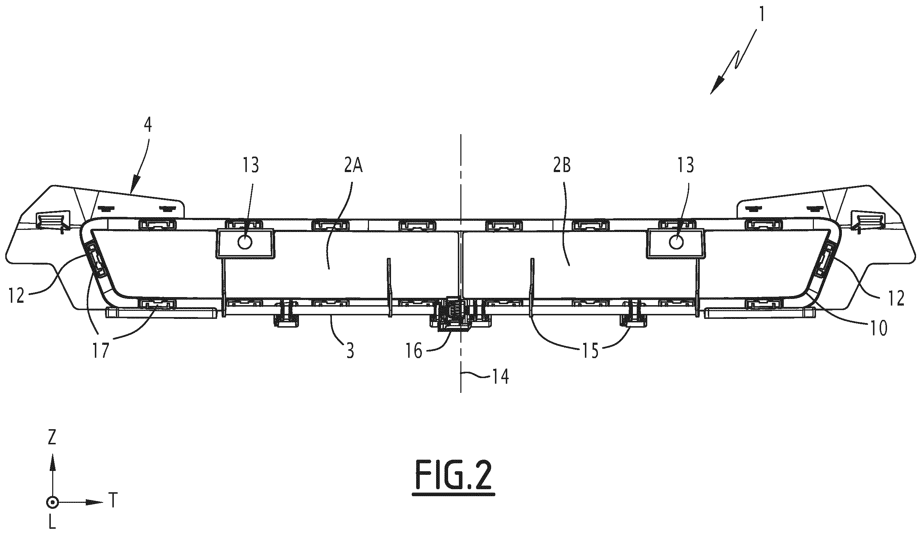

En référence aux figures 1 et 2, on décrit un dispositif d'aération 1 de véhicule s'étendant principalement selon une direction transversale T et une direction d'élévation Z, sensiblement perpendiculaire à la direction transversale. La direction transversale T correspond par exemple à la largeur du véhicule et la direction d'élévation Z correspond par example à la hauteur du véhicule lorsque le dispositif d'aération 1 est monté sur un véhicule. On définit également une direction longitudinale L sensiblement perpendiculaire aux directions transversale T et d'élévation Z, correspondant par exemple à la longueur du véhicule.

L'élément de carrosserie 4 est par exemple destiné à être monté à l'avant d'un véhicule. Dans un mode de réalisation particulier, cet élément de carrosserie est une peau de pare-chocs avant.

Le dispositif d'aération 1 comprend au moins un élément de carrosserie 4 définissant au moins une zone d'aération 6 et un volet d'obturation 2 de la zone d'aération 6. La zone d'aération 6 est délimitée par un cadre 10 s'étendant autour d'une ou plusieurs zones d'aération 6, comme cela sera décrit plus en détail ultérieurement.

L'élément de carrosserie définit une face interne 7, tournée vers le véhicule, et une face externe 9, tournée vers l'extérieur du véhicule lorsque l'élément de carrosserie est monté sur un véhicule. L'épaisseur e de l'élément de carrosserie est définie comme étant la distance entre la face externe 9 et la face interne 7, mesurée selon la direction longitudinale L.

La zone d'aération 6 forme une zone d'entrée de l'air vers le bloc moteur du véhicule. A cet effet, la zone d'aération comprend une pluralité d'ouvertures 8. Ces ouvertures traversent l'élément de carrosserie 4 de part et d'autre, de sorte qu'elles débouchent d'un côté sur la face interne 7 et de l'autre sur la face externe 9. La zone d'aération 6 est par exemple délimitée par un cadre 10 s'étendant autour d'une ou plusieurs zones d'aération 6, comme cela sera décrit plus en détail ultérieurement. En d'autres termes, toutes les ouvertures 8 de passage d'air sont inscrites à l'intérieur du cadre 10.

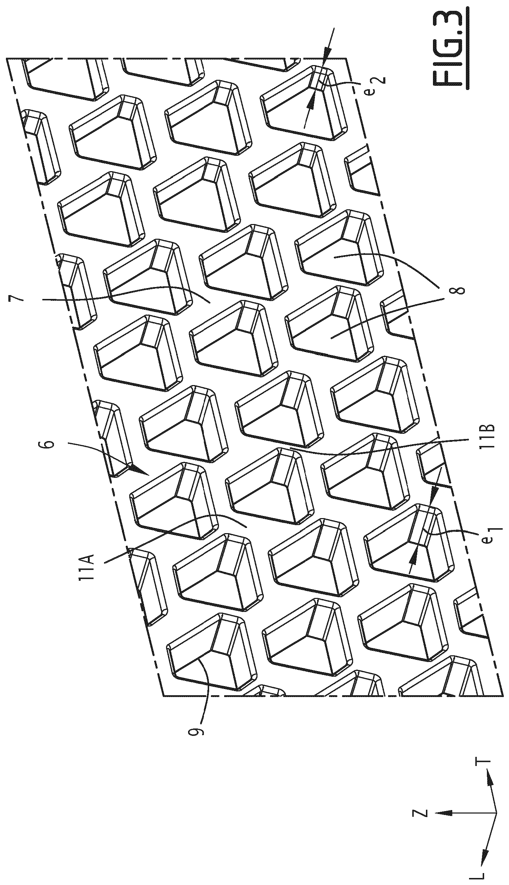

Les ouvertures 8 peuvent être de forme quelconque, par exemple polygonales ou circulaires. Comme visible sur les figures 1 et 3, les ouvertures 8 ne présentent pas nécessairement toutes la même forme et/ou la même orientation et/ou les mêmes dimensions. Ainsi, les ouvertures 8 peuvent être définies de sorte à conférer un aspect particulieur à l'élément de garnissage.

Deux ouvertures 8 adjacentes sont séparées l'une de l'autre par au moins une branche 11, par exemple venue de matière avec l'élément de carrosserie 4.

L'ensemble des ces ouvertures forme donc une grille s'étendant à l'intérieur du cadre 10 et traversant l'élément de carrosserie 4. La surface de la zone d'aération 6, définie par la surface totale des ouvertures 8 et des branches 11 formant la zone d'aération 6, peut être plus ou moins grande, c'est-à-dire que la zone d'aération 6 occupe une surface plus ou moins grande de l'élément de carrosserie selon la direction transversale T et la direction d'élévation Z. La zone d'aération 6 s'étend par exemple sensiblement au centre de l'élément de carrosserie 4 selon la direction transversale T et s'étend sur la majeure partie de l'élément de carrosserie 4 selon la direction d'élévation Z.

La face interne 7 de la zone d'aération 6 est par exemple sensiblement plane et s'étend sensiblement dans un plan s'étendant selon la direction transversale T et la direction d'élévation Z. Selon un mode de réalisation, la face externe de l'élément de carrosserie 4 est incurvée de sorte à former un élément de carrosserie bombé. En variante, l'élément de carrosserie peut présenter une courbure quelconque.

Dans ce cas, afin d'avoir une face interne 7 de la zone d'aération sensiblement plane alors que la face externe en regard est incurvée, l'épaisseur e de l'élément de carrosserie 4 est variable dans la zone d'aération 6 afin de compenser l'écart se formant entre la face interne 7 et la face externe 9 de la zone d'aération. Par exemple, la face externe 9 forme une concavité tournée vers l'intérieur du véhicule, c'est-à-dire que la face externe 9 s'écarte progressivement de la face interne 7 des bords latéraux 12 de l'élément de carrosserie vers le centre de l'élément de carroserie selon la direction transversale T. Dans ce cas, l'épaisseur de l'élément de carrosserie augmente progressivement en allant des bords latéraux vers le centre. Tel que représenté sur la figure 3, l'épaisseur e1 de la portion de l'élément se trouvant plus proche du centre de l'élément de carrosserie est supérieure à l'épaisseur e2 d'une portion plus proche d'un bord latéral 12. En d'autres termes, plus une ouverture 8 de la zone d'aération 6 est proche du centre de l'élément de carrosserie 4 selon la direction transversale, plus l'épaisseur des branches 11 entourant cette ouverture est grande. De plus, comme représenté sur la figure 3, la branche 11A la plus proche du centre délimitant une ouverture 8 particulière présente une épaisseur plus grande que celle de la branche 11B la plus éloignée du centre délimitant cette même ouverture 8.

Selon différents modes de réalisation, plusieurs zones d'aérations peuvent être prévues, réparties selon la direction transversale T. Ainsi, selon le mode de réalisation représenté sur les figures 1 et 2, le dispositif d'aération comprend deux zones d'aération 6A, 6B séparées l'une de l'autre par une branche centrale 14 s'étendant sensiblement au centre de l'élément de carrosserie 4 selon la direction transversale T et s'étendant selon la direction d'élévation Z. Les deux zones d'aération 6 sont par exemple sensiblement symétrique l'une de l'autre par rapport à la branche centrale 14, comme plus particulièrement visible sur la figure 1.

Du côté de la face interne 7 de l'élément de carrosserie 4, le cadre 10 peut comprendre un ou plusieurs éléments de fixation 13 permettant de fixer l'élément de carrosserie 4 à la caisse du véhicule. Egalement du côté de la face interne 7, l'élément de carrosserie 4 peut présenter une ou plusieurs zones techniques 17 s'étendant autour du cadre 10, c'est-à-dire en dehors de la ou des zones d'aération 6, et permettant de fixer l'élément de carrosserie 4 à son environnement et/ou permettant de fixer des éléments rapportés sur l'élément de carrosserie.

Selon un mode de réalisation, l'intérieur du cadre 10 définit une empreinte dans la face interne 7 de l'élément de carrosserie. En d'autres termes, la ou les zones d'aération 6 s'étendant dans le cadre 10 s'étendent en creux par rapport aux bords du cadre 10 dans la face interne 7. Encore en d'autres termes, les bords du cadre 10 s'étendent en saillie vers le véhicule par rapport à la ou les zones d'aération 6 s'étendant à l'intérieur du cadre 10.

Selon un mode de réalisation, le dispositif d'aération 1 comprend un volet d'obturation 2 unique par zone d'aération 6. En d'autres termes, selon ce mode de réalisation, il y a autant de volets 2 qu'il y a de zones d'aération 6. Ainsi, selon le mode de réalisation représenté sur les figures, le dispositif d'aération comprend deux volets d'obturation 2. En variante, un même volet d'obturation 2 peut servir pour deux zones d'aération 6 ou plus.

Ainsi, selon le mode de réalisation décrit précédemment dans lequel l'élément de carrosserie 4 comprend deux zones d'aération 6A, 6B séparées par une branche centrale 14, le dispositif d'aération comprend par exemple deux volets d'obturation 2A, 2B correspondant chacun à une des zones d'aération 6.

Le ou chaque volet d'obturation 2 présente par exemple une forme de plateau sensiblement plan et s'étend selon une direction générale sensiblement transversale.

Le volet d'obturation 2 est mobile entre une position ouverte, dans laquelle il est écarté des ouvertures, laissant ainsi passer l'air au travers des ouvertures 8 de la zone d'aération, et une position fermée, dans laquelle il obture la zone d'aération 6 de sorte à fermer toutes les ouvertures de la zone d'aération 6 et à bloquer le flux d'air.

A cet effet, le volet d'obturation 2 présente une surface supérieure à celle de la surface d'aération 6 correspondante, de sorte qu'il ferme toutes les ouvertures de la zone d'aération 6 dans la position fermée. De plus, le fait de prévoir un volet d'obturation 2 présentant une surface supérieure à celle de la zone d'aération 6 permet à ce volet d'être adapté à d'autres éléments de carrosserie 4, présentant par exemple une zone d'aération 6 de même surface mais dont les ouvertures ont une forme différente ou d'une surface inférieure. En d'autres termes, le volet d'obturation 2 n'est pas spécifique à un modèle particulier d'élément de carrosserie 4 et peut être utilisé avec des éléments de carrosserie 4 dont la ou les zones d'aération présentent des dimensions et/ou des formes différentes.

Par exemple, en position ouverte, le volet d'obturation s'étend dans un plan s'étendant selon la direction longitudinale L et la direction transversale T, et, en position fermée, le volet d'obturation s'étend dans un plan s'étendant selon la direction transversale T et la direction d'élévation Z.

Le volet d'obturation 2 et la face interne 7 étant chacun sensiblement plan, comme décrit précédemment, le volet d'obturation 2 est en contact plan sur plan dans la position fermée du volet, ce qui garantit une obturation efficace des ouvertures de la zone d'aération 6 en position fermée. De plus, le volet d'obturation 2 n'a pas besoin d'être adapté à une forme particulière de la face interne 7 de la zone d'aération 6 de sorte qu'un même volet d'obturation 2 peut être utilisé pour plusieurs modèles d'élément de carrosserie, comme décrit précédemment. En d'autres termes, il est possible de sur-dimensionner les volets d'obturation 2 et d'assurer le contact plan sur plan avec les zones d'aération 6, afin de permettre de les monter sur différents éléments de carrosserie.

Cet avantage lié à l'invention permet alors de simplifier le processus de production en mutualisant des pièces fonctionnelles entre plusieurs véhicules, sans nuire à l'aspect esthétique, qui repose sur l'élément de carrosserie 4.

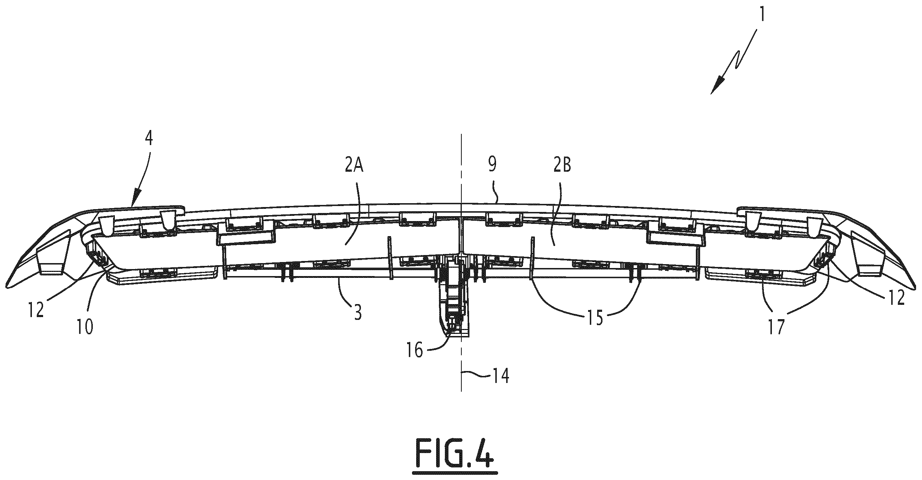

Lorsque l'intérieur du cadre 10 forme une empreinte, comme décrit précédemment, le volet d'obturation 2 est par exemple reçu dans l'empreinte en position fermée de sorte à être affleurant avec les bords du cadre 10 en position fermée, comme plus particulièrement visible sur la figure 4.

Le volet d'obturation 2 est par exemple mobile en rotation, entre la position fermée et la position ouverte. Plus particulièrement, le volet d'obturation 2 est par exemple solidaire d'un arbre 3 articulé à l'élément de carrosserie et formant l'axe de rotation du volet d'obturation

Dans le cas où le volet d'obturation 2 est mobile en rotation, au moins un actionneur 16 permet d'entrainer l'axe de rotation formé par l'arbre 3 par un moyen d'entrainement quelconque. En particulier, Cet actionneur peut se situer, par exemple sur un élément de fixation s'étendant en saillie de la face interne de l'élément de carrosserie 4 selon la direction longitudinale, tel que représenté sur la figure 4.

Sur le mode de réalisation illustré figure 1 et 2, l'axe de rotation s'étend le long d'un bord transversal inférieur du cadre 10, de sorte que le volet d'obturation s'étend sous la zone d'aération 6 selon la direction d'élévation Z en position ouverte. En variante, l'arbre 3 peut s'étendre le long d'un bord transversal supérieur du cadre 10 de sorte que le volet d'obturation s'étend au-dessus de la zone d'aération 6 en position ouverte. L'élément de fixation recevant l'actionneur 16 s'étend par exemple en saillie du bord du cadre 10 le long duquel s'étend l'arbre 3.

Selon un mode de réalisation, lorsque plusieurs volets sont prévus, ceux-ci sont par exemple solidaires d'un même arbre 3 de sorte que tous les volets sont déplacés simultanément entre la position ouverte et la position fermée.

Dans le cas où plusieurs volets d'obturation 2 sont prévus, ceux-ci peuvent être mis en rotation au moyen d'un ou plusieurs actionneurs 16, pilotés par exemple de manière synchrone, afin d'assurer le déplacement simultané des volets.

En particulier, comme représenté sur la figure 4, un unique actionneur 16 peut être situé sensiblement au niveau de la branche centrale. Celui-ci entraine alors les volets 2A et 2B par l'intermédiaire de leur axe de rotation commun, de manière synchrone.

En variante, chaque volet 2 est mobile en rotation par l'intermédiaire d'un arbre 3 propre de sorte que les volets 2 peuvent être actionnés indépendamment les uns des autres entre la position fermée et la position ouverte. Ledit volet est par exemple monté du côté de la face interne de l'élément de carrosserie 4. A cet effet, l'un des bords transversaux du cadre 10, plus particulièrement le bord transversal inférieur du cadre 10 selon le mode de réalisation représenté sur les figures, comprend un ou plusieurs guides 15 s'étendant sur la face interne 7 de l'élément de carrosserie et recevant le ou les arbres 3 du ou des volets d'obturation 2 et guidant la rotation du ou des volets d'obturation entre la position fermée et la position ouverte.

Selon un mode de réalisation particulier, le volet d'obturation 2 peut prendre toute position intermédiaire entre la position fermée et la position ouverte, afin de réguler le flux d'air entrant dans le véhicule de manière continue entre une obturation nulle et totale.

## Revendications

1. Dispositif d'aération (1) pour un véhicule, comprenant :
- un élément de carrosserie (4), comprenant une face externe (9), tournée vers l'extérieur du véhicule, et une face interne (7), opposée à la face externe (9), ledit élément de carrosserie (4) comprenant au moins une zone d'aération (6) comprenant une pluralité d'ouvertures (8) traversant le corps de la face externe (9) à la face interne (7), l'élément de carrosserie (4) s'étendant selon une direction générale transversale T,
- un volet d'obturation (2) mobile entre une position fermée, dans laquelle le volet obture les ouvertures (8) de la zone d'aération (6), et une position ouverte, dans laquelle le volet d'obturation (2) est écarté desdites ouvertures (8),
**caractérisé en ce que** le volet d'obturation (2) présente une surface supérieure à la surface de la zone d'aération (6).

2. Dispositif d'aération (1) pour un véhicule selon la revendication 1, dans lequel le volet d'obturation (2) est monté du côté de la face interne (7) de l'élément de carrosserie (4).

3. Dispositif d'aération (1) selon la revendication 1 ou 2, dans lequel la face interne (7) de l'élément de carrosserie (4) est sensiblement plane et la face externe (9) est sensiblement incurvée au moins dans la zone d'aération (6).

4. Dispositif d'aération (1) selon la revendication 3, dans lequel l'épaisseur du corps de l'élément de carrosserie varie selon la direction transversale entre la face interne et la face externe au moins dans la zone d'aération (6) de façon à définir la face interne (7) sensiblement plane et la face externe (9) sensiblement incurvée.

5. Dispositif d'aération (1) selon la revendication 3 ou 4, dans lequel le volet d'obturation (2) est sensiblement plan, de sorte que ledit volet est appliqué contre la face interne de l'élément de carrosserie (4) en position fermée.

6. Dispositif d'aération (1) selon la revendication 5, dans lequel le volet d'obturation (2) est monté mobile en rotation entre la position fermée et la position ouverte autour d'un axe de rotation s'étendant le long d'un bord transversal de la zone d'aération, ledit bord transversal s'étendant selon la direction transversale T.

7. Dispositif d'aération (1) selon l'une quelconque des revendications 1 à 6, dans lequel l'élément de carrosserie comprend au moins deux zones d'aération (6), lesdites zones d'aération s'étendant de part et d'autre d'un axe central selon la direction transversale T de l'élément de carrosserie (4), l'axe central s'étendant selon une direction d'élévation sensiblement perpendiculaire à la direction transversale.

8. Dispositif d'aération selon la revendication 7, comprenant deux volets d'obturation (2A) (2B), chaque volet d'obturation étant mobile entre une position fermée, dans laquelle chaque volet ferme une des deux zones d'aération (6) et une position ouverte dans laquelle les chaque volet d'obturation (2) est écarté des ouvertures d'une des deux zones d'aération (6).

9. Dispositif d'aération (1) selon la revendication 8, dans lequel les deux volets (2A) (2B) sont solidaires d'un même axe de rotation.

10. Dispositif d'aération (1) selon l'une quelconque des revendications 7 à 9, dans lequel chaque zone d'aération (6) s'étend selon la direction transversale T d'un bord latéral, s'étendant selon la direction d'élévation Z, à l'axe central, l'épaisseur du corps augmentant dudit bord latéral vers l'axe central de sorte que la face interne (7) de chaque zone d'aération (6A) (6B) est sensiblement plane et la face externe (9) de chaque zone d'aération (6) est sensiblement incurvée.
